# EUROPEAN PATENT APPLICATION

(11) **EP 4 459 485 A1**
(43) Date of publication of application: **06.11.2024**
(21) Application number: 23216237.0
(22) Date of filing: 13.12.2023
(51) Int. Cl.: G06F 21/51, G06F 21/57, G06F 21/64

(54) **METHOD AND APPARATUS FOR MULTI-DIMENSIONAL ATTESTATION FOR A SOFTWARE APPLICATION**

(30) Priority: 03.05.2023 US 202318311253
(71) Applicant: INTEL Corporation, Santa Clara, CA 95054 (US)
(72) Inventor: MELARA, Marcela S., Beaverton, 97007 (US); VAVALA, Bruno, Hillsboro, 97124 (US); STEINER, Michael, Portland, 97201 (US); SCARLATA, Vincent, Beaverton, 97006 (US); VAHLDIEK-OBERWAGNER, Anjo Lucas, 14167 Berlin (DE)
(74) Representative: 2SPL Patentanwälte PartG mbB

(57) **Abstract**

A method and apparatus for multi-dimensional attestations for a software application. A multi-dimensional attestation is generated for at least one component of the software application. The multi-dimensional attestation includes a signed attestation for the at least one component and an attestation reference to at least one other related component. A verifier obtains multi-dimensional attestations for the components of the software application and obtains the signed attestation for the related components of the software application based on the attestation reference and verifies integrity of at least part of the software application based on the obtained signed attestations. The multi-dimensional attestation for a given component of a software application can link attestations across spatial and temporal dimensions including other microservice(s) that communicates directly with the subject microservice, imported code dependencies on which the subject microservice is dependent, and/or the underlying software layer of the subject microservice.

## Description

### Background

Cloud applications are developed in a highly agile, dynamic, and decentralized manner. A single cloud application is inherently compositional, rather than monolithic, comprised of several cooperating microservices, each of which implements a specific function of the application and is subject to a frequent software update schedule. This new software development and deployment model has resulted in two major challenges to creating trustworthy cloud applications.

First, each microservice is built through a multi-layer, multi-party, geo-distributed software supply chain. A single microservice is composed of several first- and third-party dependencies that are themselves built through complex software supply chains and linked together in a main application. This main application, in turn, runs on top of a guest operating system within its container runtime. Directly underlying a typical application deployment are the container management and service mesh layers, which manage the execution and networking for the individual containers running each microservice, respectively. Further, these layers typically run within a virtual machine (VM), running on top of a hypervisor on the compute node. Each layer of a microservice's software stack has its own complex supply chain.

Simultaneously, due to the compositional and interconnected nature of cloud applications, a security vulnerability or weakness in any one of the microservices, their dependencies, or layers of the software stack can propagate to the detriment of the entire composition. This has led the cloud service providers (CSP) and the multiple cooperating tenants to increasingly operate under a zero-trust model in which all parties perform mutual verification of all components, their origins, and their provenance before application deployment.

Yet, current attestation models cannot accommodate these trends and enable customers to establish trust in such cloud applications. Hardware attestation of trusted execution environments (TEEs) or any attested hardware are often static and do not reflect the myriad individual components of microservices, their execution environment, and supply chains. Software-based attestation, on the other hand, must be implemented ad-hoc for each individual component and layer.

There have been three classes of previous solutions to these problems. Static attestation solutions provide integrity for a single version of the code running inside of a TEE. Extendable attestation solutions are capable of providing integrity for extensions to the initial TEE memory at run-time. Software-based solutions enable authentication of the final product and its components (e.g., code signatures or signed software bill of materials). These solutions are not designed for decentralized applications and attestation for entire portions of the software stack with a single "flat" attestation.

Previous solutions require customers to know a priori all the software components and layers covered by a single flat attestation, even if they only wish to verify a single component. These solutions also require customers to independently detect when an attestation has been revoked or whether the software has been patched following a vulnerability disclosure.

### Brief description of the Figures

Some examples of apparatuses and/or methods will be described in the following by way of example only, and with reference to the accompanying figures, in which
FIG. 1 shows an example attestation graph for an example microservice deployment for a cloud application;
FIG. 2 shows an example structure of a multi-dimensional attestation;
FIG. 3 is a flow diagram of an example process for generating multi-dimensional attestations for a software application;
FIG. 4 is a flow diagram of an example process for attestation verification of a software application;
FIG. 5 is a block diagram of an example apparatus for generating multi-dimensional attestations for a software application; and
FIG. 6 is a block diagram of an example apparatus for attestation verification for a software application.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e., only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the instructions contained in the software or firmware are not actively being executed by the system, device, platform, or resource.

The description may use the phrases "in an example," "in examples," "in some examples," and/or "in various examples," each of which may refer to one or more of the same or different examples. Furthermore, the terms "comprising," "including," "having," and the like, as used with respect to examples of the present disclosure, are synonymous.

Examples disclosed herein are related to software and hardware attestation, for example, zero-trust cloud hardware and software stacks. Attestation is the process of demonstrating that a software executable has been properly instantiated on a platform.

The examples disclosed herein may be applied for attestation of a software application, e.g., a cloud application. Hereafter, examples will be explained with reference to a cloud application just as an example. It should be noted that the examples disclosed herein are not limited to a cloud application, but applicable to any software applications, e.g., local/client applications, edge computing, Internet of Things (IoT), etc. A cloud application is a software program where cloud-based components and local components work together. Cloud application servers are typically located in a remote data center operated by a cloud services provider (CSP). The cloud application may comprise a plurality of microservices. A microservice architecture is an organizational approach to software development where software is composed of small independent services that communicate over well-defined interfaces, e.g., application programming interfaces (APIs). With a microservices architecture, the cloud application may be built with independent software components that run each application process as a service. A software component is a reusable software program building block. A single software component can be combined with other software components to form an application.

In examples, the hardware attestation paradigm is extended by generating an attestation graph that maps all software and hardware components in a software application and represents their relationships along the spatial and temporal dimensions. This provides richer attestation semantics and enables tenants and CSPs to verify all or any individual components of a software application, including their dependencies and evolution over time.

Examples disclosed herein introduce multi-dimensional chained attestations to form an attestation graph that maps to a software application (e.g., a cloud application) composition. The multi-dimensional attestation for a given component (hardware or software component) of a software application can link attestations across spatial and/or temporal dimensions, i.e., multi-dimensional. A multi-dimensional attestation may link two or more attestations including (1) a set of dependencies from which the component was built, (2) one or more layers of its underlying software stack, (3) remote endpoints within the software application, (4) its creation process or provenance, and/or (5) previous software release versions, etc.

With this scheme, customers/verifiers may verify the attestation for the individual components or layers in the entire software stack they care most about. Temporally chained attestations reduce the risks of allowing outdated software by enabling more efficient revocation of attestations over outdated software components. In addition, including dependency attestations enables providing software-level attestations that comply with software supply chain regulations by design.

Multi-dimensional chained attestations in accordance with examples disclosed herein make explicit all the different components in a software application to enable the customer to establish trust in (at least a part of) a software application composition. Multi-dimensional attestations for a software application involve two operations: attestation generation and attestation verification.

Multi-dimensional attestations are generated in accordance with an attestation graph. An attestation graph is made up of nodes that are connected by edges (arrows). The nodes of the attestation graph represent attestations about individual software and hardware components of the software application, and the edges between nodes of the attestation graph represent spatial or temporal pointers to other related/linked attestations.

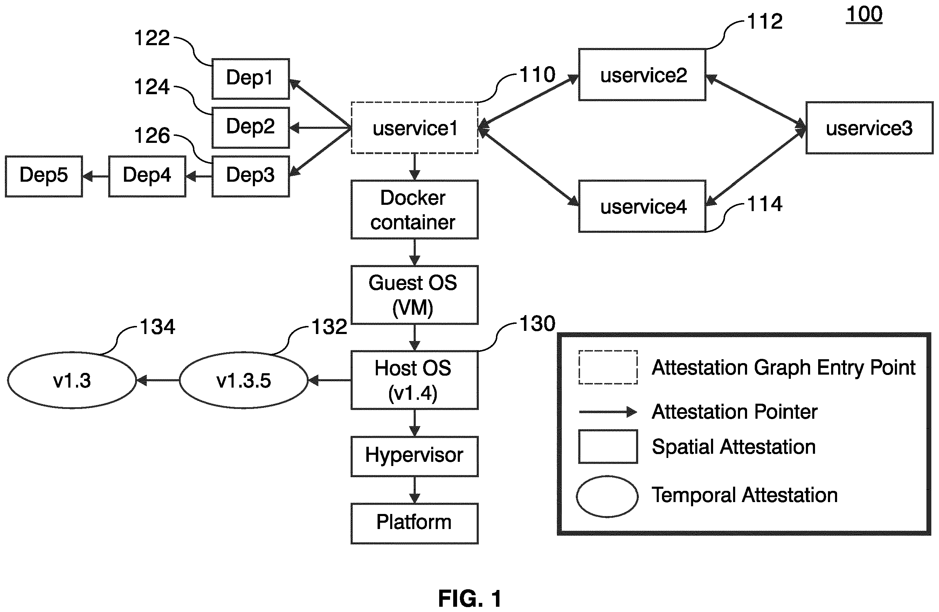

FIG. 1 shows an example attestation graph 100 for an example microservice deployment for a cloud application. In this example, the "entry point" into the attestation graph 100 for the application composition is via the uservice1 attestation node 110. The example attestation graph 100 shows direct and indirect relationships of the components of the cloud application with other software and hardware components of the cloud application in both temporal and spatial dimensions. For example, the microservice uservice1 110 has a direct dependency on dependencies Dep1, Dep2, and Dep3 122-126, and directly communicates with microservices uservice2 112 and uservice4 114. A software dependency is a relationship between software components where one component relies on the other to work properly. The attestation graph 100 shows these relationships in a spatial domain. The attestation graph 100 also shows pointers to previous releases 134, 136 of the host OS v1.3.5 and v1.3 from the current version of host OS v. 1.4 132, as an example for a relationship in a temporal domain.

The attestation graph 100 may be built incrementally and cooperatively by multiple different attestors. The attestors may be a software vendor, a cloud service provider, a trusted third-party, or the like. Alternatively, the attestation graph 100 may be built by a single attestation producer. The contents of the nodes and the semantics of the spatial and temporal edges of the multi-dimensional attestation are specific to the application domain that generates the attestations and the trust requirements of the customer.

A multi-dimensional attestation may be generated for at least one component (e.g., each component) of a cloud application based on the attestation graph for the cloud application. In the example shown in FIG. 1, a multi-dimensional attestation may be generated for at least one of the microservices uservice1-uservice3, at least one of the dependencies Dep1-Dep5, and at least one of the underlying software/hardware stack components.

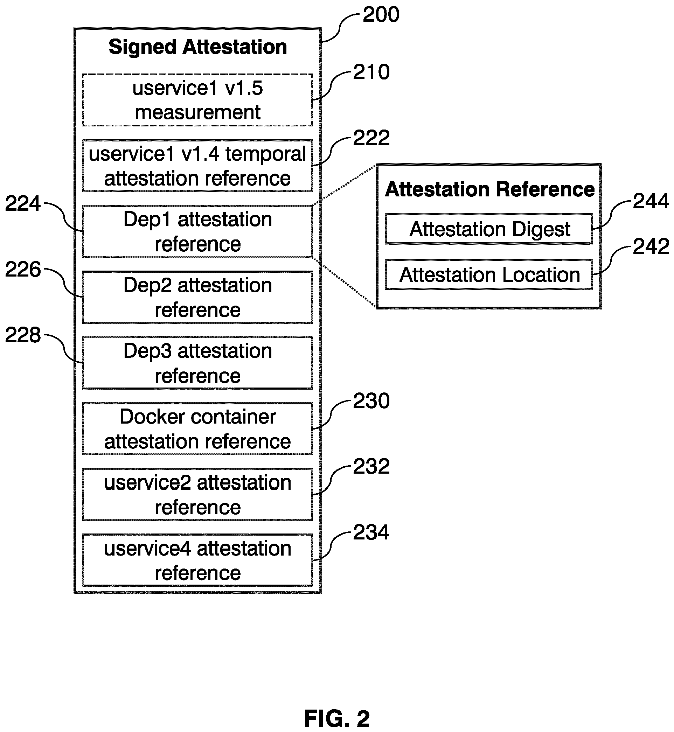

In examples, a multi-dimensional attestation for the at least one component of a cloud application includes an attestation subject and at least one attestation reference that points to another component related to the subject application component. FIG. 2 shows an example structure of a multi-dimensional attestation. The multi-dimensional attestation 200 includes attestation subject (signed attestation) and one or more attestation references. An attestation is a piece of data for verification of any property of that software artifact. In this example, the attestation subject 210 is the signed attestation of the current version of microservice uservice1 (e.g., v1.5). The attestation subject 210 includes an attestation measurement(s) (e.g., the cryptographic hash(es) of component binaries) of the subject application component. The attestation may be generated and digitally signed using a cryptographic key by a software vendor, a cloud service provider, a trusted third-party, or the like.

The multi-dimensional attestation 200 includes one or more attestation references pointing to one or more attestations about other application components related to the subject component. The attestation reference may be spatial pointers or temporal pointers. Spatial pointers refer to attestations about (1) other microservice(s) that communicates directly with the subject microservice, (2) imported code dependencies on which the subject microservice is dependent, and/or (3) the underlying software layer of the subject microservice, etc. Temporal pointers may point to a prior software release of the microservice or software component. In the example shown in FIG. 2, the attestation references for the microservice uservice1 210 include a reference 222 to prior release of uservice1 (e.g., v1.4), a reference 224 to dependency 1, a reference 226 to dependency2, a reference 228 to dependency3, a reference 230 to a Docker container (generally a container or a software layer), and references 232, 234 to linked microservices uservice2 and uservice4 with which uservice1 directly communicates. A container is a standard unit of software that packages up code and all its dependencies so the application runs quickly and reliably from one computing environment to another. A Docker container image is a lightweight, standalone, executable package of software that includes everything needed to run an application including code, runtime, system tools, system libraries and settings.

Each attestation reference includes identifying information 242 (e.g., an attestation location). The identifying information 242 is information for identifying the corresponding attestation (e.g., the location of the corresponding attestation). With the identifying information 242, a customer or verifier, or anyone, can access and retrieve the corresponding attestation from the indicated location. For example, the identifying information 242 may use a standard identifier format, e.g., a uniform resource locator (URL) or a uniform resource identifier (URI) of the corresponding attestation.

Each attestation reference may also include an attestation digest 244. The attestation digest 244 may be a cryptographic hash of the corresponding attestation. The attestation digest 244 may be included in the attestation reference for verification purposes. Any entity that retrieves the corresponding attestation from the location indicated by the identifying information 242 may verify the integrity of the retrieved attestation using the attestation digest 244 included in the attestation reference.

In some examples, as an alternative, instead of attestation reference, the corresponding attestation may be included in the multi-dimensional attestation 200. One or more attestation references in the multi-dimensional attestation 200 may be replaced with the signed attestation itself of the corresponding software/hardware component(s). For example, instead of the attestation reference 232 for uservice2, the attestation for uservice2 may be included in the multi-dimensional attestation 200.

When a customer or verifier seeks to validate (all or a part of) an application composition of a cloud application, the customer or verifier may traverse the attestation graph by following the attestation references in a given attestation node. The customer or verifier may validate at least part of the cloud application based on the multi-dimensional attestation. Since the attestation contents and data representation is specific to the application domain, the validation mechanisms can vary. The multi-dimensional attestation enables customers/verifiers to validate sections of the attestation graph of interest, and interpret the information provided according to their trust requirements.

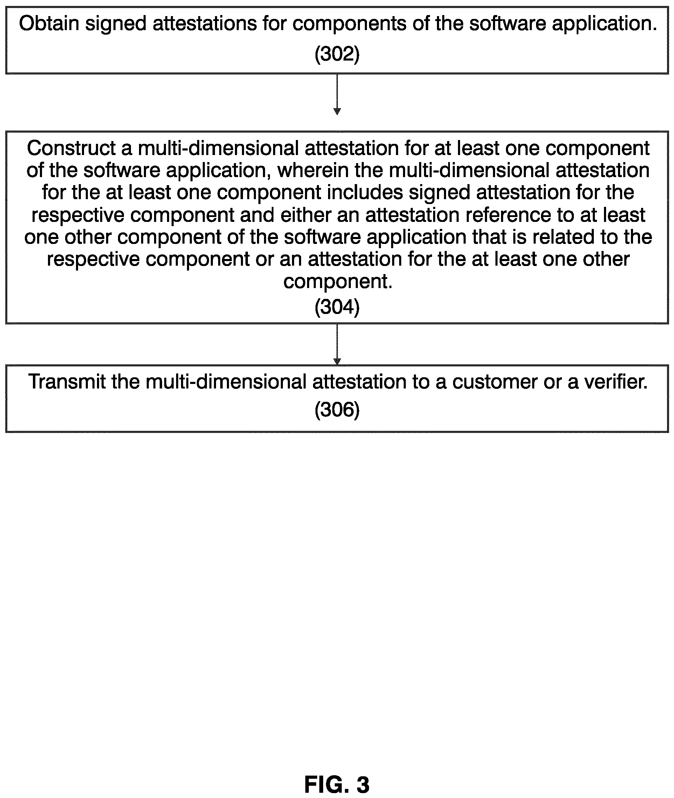

FIG. 3 is a flow diagram of an example process for generating multi-dimensional attestations for a software application (e.g., a cloud application). A customer running a (confidential) cloud application may wish to verify that the application was deployed on the software stack (including the attested hardware platform) matching the description documented by the CSP. The CSP or a third-party may generate and transmit multi-dimensional attestations for the components of the software application to a customer or a third-party verifier, and the customer or the third-party verifier may verify at least a part of the cloud application based on the multi-dimensional attestations.

In one example, to generate multi-dimensional attestations, the CSP or a third-party may first obtain/collect signed attestations for all components of the software application (302). For example, the CSP may obtain signed attestations for all layers of software that the CSP loads onto the platform at deployment time. To enable integrity checking of specific software versions, these signed attestations may, for instance, contain the cryptographic hash of component binaries as well as the software release information.

Assuming a deployment as depicted in FIG. 1 on an attested hardware, the set of signed attestations may include attestations for the documented releases of the library operating system (OS) that will run the customer's application, the guest OS binary running inside the VM, and the host OS and the hypervisor running the VM. For components that implement critical software patches, the CSP or the third-party may additionally collect signed attestations for the previous releases as proof of software upgrade. The CSP or the third party may obtain pre-computed signed attestations from individual software layer vendors or compute self-signed attestations for each component the CSP deploys. The CSP may additionally generate the attestation for the hardware platform running the software stack.

The CSP or the third-party may construct a multi-dimensional attestation for at least one component (e.g., each component) of the software application (304). The multi-dimensional attestation for each component includes signed attestation for a respective component and either an attestation reference to at least one other component of the software application that is related to the respective component or an attestation for at least one other component. The CSP or the third-party generates the multi-dimensional attestation by generating attestation references for each collected attestation and digitally signing the collection of attestation references.

The CSP or the third party then transmits the multi-dimensional attestation(s) for the component(s) of the software application to a customer or a verifier (306). The CSP or the third party also provide any referenced self-signed attestations generated for individual components.

The at least one other component may include at least one of a dependency on which the respective component is dependent, a previous release of the respective component, another component with which the respective component communicates, or a software layer (e.g., a container) on which the respective software component runs.

Each attestation reference includes identifying information of a signed attestation that is referenced in each attestation reference. The identifying information may use a standard identifier format, e.g., a uniform resource locator (URL) or a uniform resource identifier (URI). Each attestation reference may further include a digest of the signed attestation that is referenced in each attestation reference.

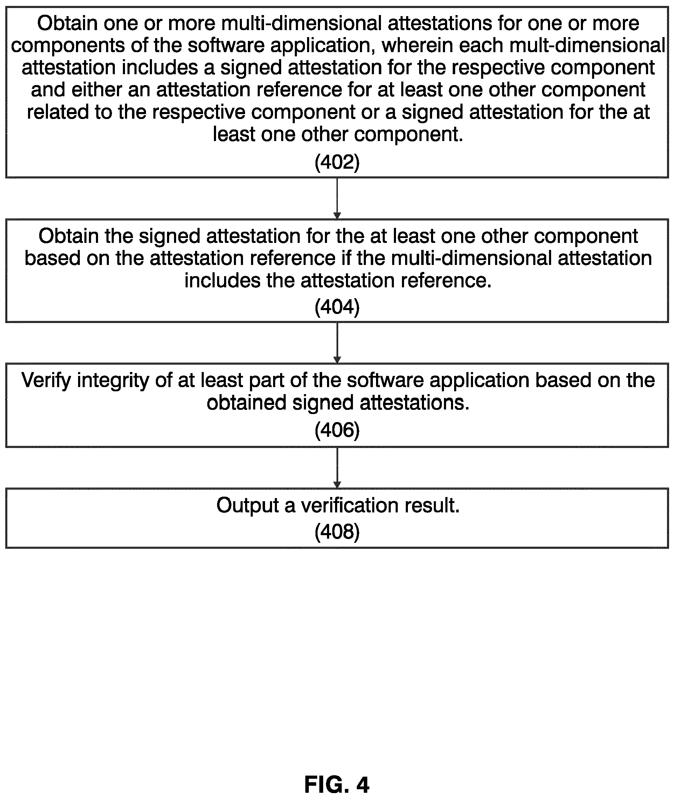

FIG. 4 is a flow diagram of an example process for attestation verification of a software application (e.g., a cloud application). To verify the integrity of the software stack, the customer (or a trusted third party) may first implement a verifier as part of a data processing microservice that validates the CSP's multi-dimensional attestation prior to loading private data. The verifier obtains the CSP's attestations (i.e., multi-dimensional attestations) from the pre-specified location.

The verifier obtains one or more multi-dimensional attestations for one or more components of the software application (402). Each multi-dimensional attestation includes a signed attestation for the respective component and either an attestation reference for at least one other component related to the respective component or a signed attestation for at least one other component. The at least one other component may include at least one of a dependency on which the respective component is dependent, a previous release of the respective component, another component with which the respective component communicates, or a software layer (e.g., a container) on which the respective component runs.

The verifier obtains the signed attestation for at least one other component based on the attestation reference if the multi-dimensional attestation includes the attestation reference (404). The verifier iteratively obtains the referenced signed attestations from the indicated locations in the reference attestation, e.g., from the CSP or the component vendor, etc.

The verifier then verifies integrity of at least part of the software application based on the obtained signed attestations (406). For example, the verifier compares the cryptographic hash or measurement indicated in the attestation against a pre-defined set of expected values for the corresponding component. The verifier also ensures that any attested prior and upgraded software component versions comply with the customer's pre-defined software upgrade policy. The verifier may then output a verification result (408). A trust decision may be made based on the verification result in accordance with a trust policy. For example, a microservice access to requested private data may be granted or denied based on the verification result.

The attestation reference includes identifying information (e.g., location information) of the signed attestation for at least one other component. The identifying information may use any standard identifier format, e.g., a URL or a URI. The attestation reference may include a digest of the signed attestation for at least one other component, such that integrity of the obtained signed attestation for at least one other component may be verified based on the digest.

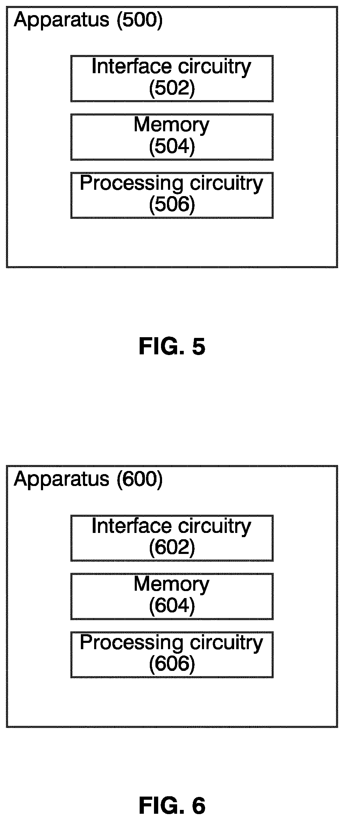

FIG. 5 is a block diagram of an example apparatus for generating multi-dimensional attestations for a software application. The apparatus 500 includes interface circuitry 502, memory 504 for storing machine-readable instruction, and processing circuitry 506. The processing circuitry 506 is for executing the machine-readable instruction to receive signed attestations for components of the software application, construct a multi-dimensional attestation for each component of the software application, and transmit multi-dimensional attestations for the components of the software application to a customer or a verifier. The multi-dimensional attestation for each component includes a signed attestation for the respective component and either an attestation reference to at least one other component of the software application that is related to the respective component or a signed attestation for at least one other component. The at least one other component includes at least one of a dependency on which the respective component is dependent, a previous release of the respective component, another component with which the respective component communicates, or a software layer (e.g., a container) on which the respective software component runs. Each attestation reference includes identifying information of a signed attestation that is referenced in the attestation reference. Each attestation reference may further include a digest of the signed attestation that is referenced in the attestation reference.

FIG. 6 is a block diagram of an example apparatus for attestation verification for a software application. The apparatus 600 includes interface circuitry 602, memory 604 for storing machine-readable instructions, and processing circuitry 606. The processing circuitry 606 is for executing the machine-readable instructions to obtain one or more multi-dimensional attestations for one or more components of the software application, wherein each multi-dimensional attestation includes a signed attestation for the respective component and either an attestation reference for at least one other component related to the respective component or a signed attestation for at least one other component, obtain the signed attestation for at least one other component based on the attestation reference if the multi-dimensional attestation includes the attestation reference, verify integrity of at least part of the software application based on the obtained signed attestations, and output a verification result. The at least one other component includes at least one of a dependency on which the respective component is dependent, a previous release of the respective component, another component with which the respective component communicates, or a software layer (e.g., a container) on which the respective component runs. The attestation reference includes identifying information of the signed attestation for at least one other component, and may also include a digest of the signed attestation for at least one other component. The processing circuitry 606 may be further configured to verify integrity of the obtained signed attestation for at least one other component based on the digest.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:

An example (e.g., example 1) relates to a method for generating multi-dimensional attestations for a software application. The method includes obtaining signed attestations for components of the software application, constructing a multi-dimensional attestation for at least one component of the software application, wherein the multi-dimensional attestation for the at least one component includes a signed attestation for a respective component and either an attestation reference to at least one other component of the software application that is related to the respective component or a signed attestation for the at least one other component, and transmitting the multi-dimensional attestation to a customer or a verifier.

Another example, (e.g., example 2) relates to a previously described example (e.g., example 1), wherein the at least one other component includes a dependency on which the at least one component is dependent.

Another example, (e.g., example 3) relates to a previously described example (e.g., any one of examples 1-2), wherein the at least one other component includes a previous release of the at least one component.

Another example, (e.g., example 4) relates to a previously described example (e.g., any one of examples 1-3), wherein the at least one other component includes another component with which the at least one component communicates.

Another example, (e.g., example 5) relates to a previously described example (e.g., any one of examples 1-4), wherein the at least one other component includes a software layer on which the at least one software component runs.

Another example, (e.g., example 6) relates to a previously described example (e.g., any one of examples 1-5), wherein the attestation reference includes identifying information of a signed attestation that is referenced in the attestation reference.

Another example, (e.g., example 7) relates to a previously described example (e.g., example 6), wherein the identifying information uses a standard identifier format.

Another example, (e.g., example 8) relates to a previously described example (e.g., any one of examples 6-7), wherein the attestation reference further includes a digest of the signed attestation that is referenced in the attestation reference.

Another example, (e.g., example 9) relates to a method for attestation verification of a software application. The method includes obtaining a multi-dimensional attestation for at least one component of the software application, wherein the multi-dimensional attestation includes a signed attestation for a respective component and either an attestation reference for at least one other component related to the respective component or a signed attestation for the at least one other component, obtaining the signed attestation for the at least one other component based on the attestation reference if the multi-dimensional attestation includes the attestation reference, verifying integrity of at least part of the software application based on the obtained signed attestations, and outputting a verification result.

Another example, (e.g., example 10) relates to a previously described example (e.g., example 9), wherein the at least one other component includes at least one of a dependency on which the at least one component is dependent, a previous release of the at least one component, another component with which the at least one component communicates, or a software layer on which the at least one component runs.

Another example, (e.g., example 11) relates to a previously described example (e.g., any one of examples 9-10), wherein the attestation reference includes identifying information of the signed attestation for the at least one other component.

Another example, (e.g., example 12) relates to a previously described example (e.g., example 11), wherein the identifying information uses a standard identifier format.

Another example, (e.g., example 13) relates to a previously described example (e.g., any one of examples 11-12), wherein the attestation reference includes a digest of the signed attestation for the at least one other component, and the method further comprises verifying integrity of the obtained signed attestation for the at least one other component based on the digest.

Another example, (e.g., example 14) relates to an apparatus for generating multi-dimensional attestations for a software application. The apparatus includes interface circuitry, memory for storing machine-readable instructions, and processing circuitry for executing the machine-readable instructions to: receive signed attestations for components of the software application, construct a multi-dimensional attestation for at least one component of the software application, wherein the multi-dimensional attestation for the at least one component includes a signed attestation for a respective component and either an attestation reference to at least one other component of the software application that is related to the respective component or a signed attestation for the at least one other component, and transmit the multi-dimensional attestation to a customer or a verifier.

Another example, (e.g., example 15) relates to a previously described example (e.g., example 14), wherein the at least one other component includes at least one of a dependency on which the at least one component is dependent, a previous release of the at least one component, another component with which the at least one component communicates, or a software layer on which the at least one software component runs.

Another example, (e.g., example 16) relates to a previously described example (e.g., any one of examples 14-15), wherein the attestation reference includes identifying information of a signed attestation that is referenced in the attestation reference.

Another example, (e.g., example 17) relates to a previously described example (e.g., example 16), wherein the attestation reference further includes a digest of the signed attestation that is referenced in the attestation reference.

Another example, (e.g., example 18) relates to an apparatus for attestation verification of a software application. The apparatus includes interface circuitry, memory for storing machine-readable instructions, and processing circuitry for executing the machine-readable instructions to: obtain a multi-dimensional attestation for at least one component of the software application, wherein the multi-dimensional attestation includes a signed attestation for a respective component and either an attestation reference for at least one other component related to the respective component or a signed attestation for the at least one other component, obtain the signed attestation for the at least one other component based on the attestation reference if the multi-dimensional attestation includes the attestation reference, verify integrity of at least part of the software application based on the obtained signed attestations, and output a verification result.

Another example, (e.g., example 19) relates to a previously described example (e.g., example 18), wherein the at least one other component includes at least one of a dependency on which the at least one component is dependent, a previous release of the at least one component, another component with which the at least one component communicates, or a software layer on which the at least one component runs.

Another example, (e.g., example 20) relates to a previously described example (e.g., any one of examples 18-19), wherein the attestation reference includes identifying information of the signed attestation for the at least one other component, and a digest of the signed attestation for the at least one other component, wherein the circuitry is further configured to verify integrity of the obtained signed attestation for the at least one other component based on the digest.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some examples, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of" can mean any combination of the listed terms. For example, the phrase "one or more of A, B and C" can mean A; B; C; A and B; A and C; B and C; or A, B, and C.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

## Claims

1. A method for generating multi-dimensional attestations for a software application, comprising:
obtaining (302) signed attestations for components of the software application;
constructing (304) a multi-dimensional attestation (200) for at least one component of the software application, wherein the multi-dimensional attestation (200) for the at least one component includes a signed attestation for a respective component and either an attestation reference to at least one other component of the software application that is related to the respective component or a signed attestation for the at least one other component; and
transmitting (306) the multi-dimensional attestation (200) to a customer or a verifier.

2. The method of claim 1, wherein the at least one other component includes a dependency on which the at least one component is dependent.

3. The method as in any one of claims 1-2, wherein the at least one other component includes a previous release of the at least one component.

4. The method as in any one of claims 1-3, wherein the at least one other component includes another component with which the at least one component communicates.

5. The method as in any one of claims 1-4, wherein the at least one other component includes a software layer on which the at least one component runs.

6. The method as in any one of claims 1-5, wherein the attestation reference includes identifying information of a signed attestation that is referenced in the attestation reference.

7. The method of claim 6, wherein the attestation reference further includes a digest of the signed attestation that is referenced in the attestation reference.

8. A method for attestation verification of a software application, comprising:
obtaining (402) a multi-dimensional attestation (200) for at least one component of the software application, wherein the multi-dimensional attestation (200) includes a signed attestation for a respective component and either an attestation reference for at least one other component related to the respective component or a signed attestation for the at least one other component;
obtaining (404) the signed attestation for the at least one other component based on the attestation reference if the multi-dimensional attestation (200) includes the attestation reference;
verifying (406) integrity of at least part of the software application based on the obtained signed attestations; and
outputting (408) a verification result.

9. The method of claim 8, wherein the at least one other component includes at least one of a dependency on which the at least one component is dependent, a previous release of the at least one component, another component with which the at least one component communicates, or a software layer on which the at least one component runs.

10. The method as in any one of claims 8-9, wherein the attestation reference includes identifying information of the signed attestation for the at least one other component.

11. The method of claim 10, wherein the attestation reference includes a digest of the signed attestation for the at least one other component, and the method further comprises verifying integrity of the obtained signed attestation for the at least one other component based on the digest.

12. An apparatus for generating multi-dimensional attestations for a software application, comprising:
interface circuitry (502);
memory (504) for storing machine-readable instructions; and
processing circuitry (506) for executing the machine-readable instructions to:
receive signed attestations for components of the software application;
construct a multi-dimensional attestation (200) for at least one component of the software application, wherein the multi-dimensional attestation (200) for the at least one component includes a signed attestation for a respective component and either an attestation reference to at least one other component of the software application that is related to the respective component or a signed attestation for the at least one other component; and
transmit the multi-dimensional attestation (200) to a customer or a verifier.

13. The apparatus of claim 12, wherein the at least one other component includes at least one of a dependency on which the at least one component is dependent, a previous release of the at least one component, another component with which the at least one component communicates, or a software layer on which the at least one software component runs.

14. An apparatus for attestation verification of a software application, comprising:
interface circuitry (602);
memory (604) for storing machine-readable instructions; and
processing circuitry (606) for executing the machine-readable instructions to:
obtain a multi-dimensional attestation (200) for at least one component of the software application, wherein the multi-dimensional attestation (200) includes a signed attestation for a respective component and either an attestation reference for at least one other component related to the respective component or a signed attestation for the at least one other component;
obtain the signed attestation for the at least one other component based on the attestation reference if the multi-dimensional attestation includes the attestation reference;
verify integrity of at least part of the software application based on the obtained signed attestations; and
output a verification result.

15. The apparatus of claim 14, wherein the at least one other component includes at least one of a dependency on which the at least one component is dependent, a previous release of the at least one component, another component with which the at least one component communicates, or a software layer on which the at least one component runs.
